# FASCICULE DE BREVET EUROPEEN

(11) **EP 2 525 007 B1**
(45) Date de publication et mention de la délivrance du brevet: **20.11.2013**
(21) Numéro de dépôt: 12167917.9
(22) Date de dépôt: 14.05.2012
(51) Int. Cl.: E04B 1/58, E04G 21/32, F16B 7/04

(54) **Dispositif de raccordement d'un premier et d'un second profilé**
Verbindungsvorrichtung zwischen zwei Proflen
Device for connecting a first and second profile section

(30) Priorité: 17.05.2011 FR 1154281
(43) Date de publication de la demande: 21.11.2012
(73) Titulaire: DANI ALU, 69280 Sainte Consorce (FR)
(72) Inventeur: Laffay, Serge, 69340 Francheville (FR); Duplat, Bruno, 69340 Francheville (FR); Rulliere, Patrice, 42800 Saint Martin la Plaine (FR); Peyron, Grégory, 69126 Brindas (FR); Canivet, Damien, 69160 Tassin (FR); Kula, Cédric, 69001 Lyon (FR); Blain, David, 69630 Chaponost (FR)
(74) Mandataire: Chevalier, Renaud Philippe

(56) Documents cités:
- EP-A2- 1 293 686
- FR-A1- 2 542 046
- US-A- 2 417 654
- US-A- 2 711 916

## Description

La présente invention se rapporte à un dispositif de raccordement d'un premier et d'un second profilé.

Lorsque les premier et second profilés doivent être raccordés de manière sensiblement perpendiculaire entre eux, il est connu de l'état de la technique d'utiliser une équerre à visser disposée à l'intérieur des profilés. Cette solution n'est pas entièrement satisfaisante dans la mesure où elle nécessite d'usiner spécifiquement les profilés afin d'assurer le vissage avec l'équerre, ce qui rend cette solution particulièrement coûteuse.

En outre, un système connu de l'état de la technique, notamment du document EP 1 293 686, comporte un corps comprenant :
- des première et seconde enceintes délimitant respectivement des première et seconde ouvertures destinées à recevoir respectivement les premier et second profilés,
- des première et seconde lumières débouchant respectivement dans les première et seconde enceintes.

Des organes de fixation tels qu'une vis sont alors disposés à travers les lumières de manière à fixer les profilés dans les enceintes correspondantes.

De la même façon, un tel système de l'état de la technique n'est pas entièrement satisfaisant dans la mesure où il est nécessaire d'usiner spécifiquement les profilés afin d'assurer leur fixation avec les organes de fixation, ce qui rend cette solution particulièrement coûteuse.

La présente invention vise à remédier à l'inconvénient précité et concerne un dispositif de raccordement d'un premier et d'un second profilé, comportant un corps comprenant :
- des première et seconde enceintes délimitant respectivement des première et seconde ouvertures destinées à recevoir respectivement les premier et second profilés,
- des première et seconde lumières débouchant respectivement dans les première et seconde enceintes, le dispositif de raccordement étant remarquable en ce qu'il comporte :
- un organe de serrage comportant des première et seconde surfaces d'appui conformées pour s'engager respectivement dans les première et seconde lumières,
- des moyens de fixation agencés pour placer l'organe de serrage sur le corps dans une position de fixation dans laquelle les première et seconde surfaces d'appui s'étendent respectivement à travers les première et seconde lumières de manière à exercer une pression respectivement sur les premier et second profilés lorsque ceux-ci sont reçus à l'intérieur des première et seconde enceintes.

Ainsi, un tel dispositif de raccordement selon l'invention permet de d'assurer le raccordement des premier et second profilés par l'intermédiaire de l'organe de serrage et des moyens de fixation. Un tel raccordement ne nécessite pas d'usinage spécifique des premier et second profilés, ceux-ci étant maintenus en position dans les première et seconde enceintes par la pression exercée par les première et seconde surfaces d'appui de l'organe de serrage.

Dans un mode de réalisation, le corps délimite un logement conformé pour que l'organe de serrage s'emboîte dans ledit logement.

Ainsi, un tel logement permet une mise en place aisée de l'organe de serrage par emboîtement.

Dans un mode de réalisation, le corps présente une surface de support orientée vers l'extérieur du corps, la surface de support étant agencée pour supporter l'organe de serrage.

Une telle surface de support permet d'y faire reposer l'organe de serrage avant sa mise en position de fixation.

Selon une forme d'exécution, les première et seconde enceintes comportent respectivement des première et seconde parois dans lesquelles sont ménagées respectivement les première et seconde lumières, et les première et seconde parois délimitent avec la surface de support le logement.

Ainsi, l'organe de serrage est maintenu en position de manière stable.

Avantageusement, la surface de support est conformée pour coopérer avec l'organe de serrage par complémentarité de forme.

Ainsi, la surface de contact entre l'organe de serrage et la surface de support est maximisée.

Avantageusement, l'organe de serrage comporte des moyens de butée agencés pour venir en butée contre la surface de support.

Ainsi, la mise en position de fixation de l'organe de serrage sur la portion de support est facilitée.

Selon une forme d'exécution, les moyens de fixation comportent une vis de fixation conformée pour coopérer avec la surface de support de sorte que la vis de fixation plaque l'organe de serrage dans la position de fixation contre la surface de support.

Préférentiellement, le corps présente une cloison agencée pour délimiter les première et seconde enceintes, et la surface de support est montée sur la cloison.

Selon une forme d'exécution, les première et seconde enceintes s'étendent respectivement suivant des premier et second axes, de préférence sensiblement perpendiculaires entre eux.

Avantageusement, les première et seconde surfaces d'appui de l'organe de serrage présentent respectivement une superficie sensiblement égale à la superficie des première et seconde lumières.

Ainsi, lesdites surfaces d'appui présentent une surface maximisée.

D'autres caractéristiques et avantages apparaîtront dans la description qui va suivre d'un mode de réalisation d'un dispositif de raccordement selon l'invention, donné à titre d'exemple non limitatif, en référence aux dessins annexés dans lesquels :
- la figure 1 est une vue en perspective éclatée d'un dispositif de raccordement selon l'invention,
- la figure 2 est une vue en perspective à l'échelle agrandie de l'organe de serrage du dispositif illustré à la figure 1,
- la figure 3 est une vue en perspective représentant le dispositif de raccordement illustré à la figure 1 dans un état assemblé en présence des profilés,
- la figure 4 est une vue en coupe du dispositif illustré à la figure 3.

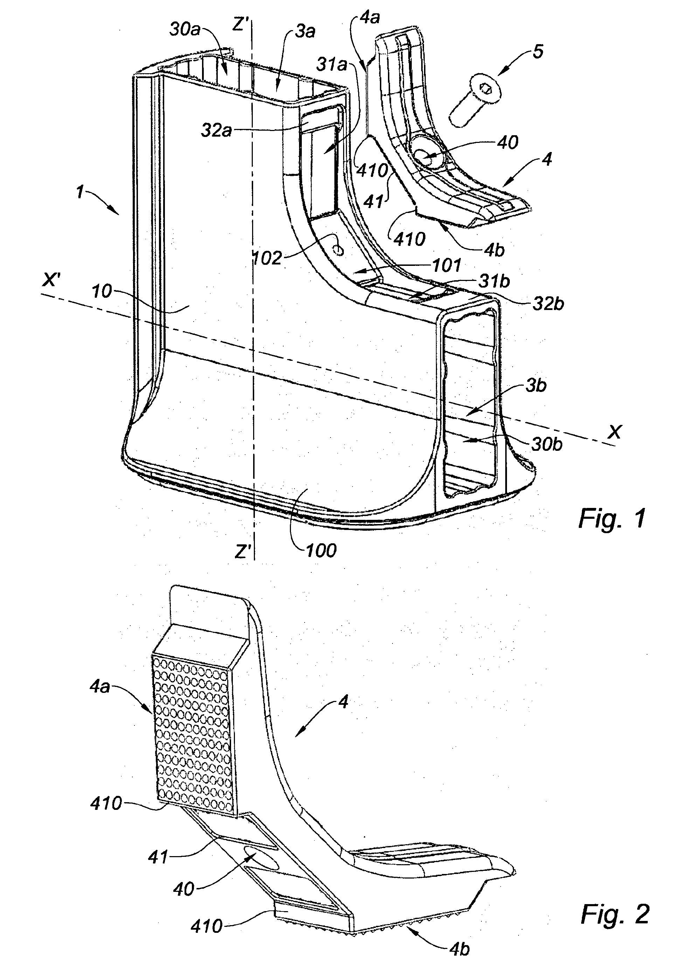

Le dispositif de raccordement 1 d'un premier et d'un second profilé 2a, 2b illustré aux figures 1, 3 et 4 comporte un corps 10 comprenant :
- des première et seconde enceintes 3a, 3b délimitant respectivement des première et seconde ouvertures 30a, 30b destinées à recevoir respectivement les premier et second profilés 2a, 2b.
- des première et seconde lumières 31a, 31b débouchant respectivement dans les première et seconde enceintes 30a, 30b.

Plus précisément, les première et seconde enceintes 3a, 3b s'étendent respectivement suivant des premier et second axes Z'-Z, X'-X sensiblement perpendiculaires entre eux. Le premier axe Z'-Z s'étend suivant un axe sensiblement vertical. Le corps 10 comporte une embase 100 adaptée pour reposer sur un sol, de préférence une toiture-terrasse.

Les première et seconde enceintes 3a, 3b présentent chacune une section transversale sensiblement rectangulaire. De même, les premier et second profilés 2a, 2b présentent chacun une section transversale sensiblement perpendiculaire. Le premier profilé 2a peut être un poteau de support de lisse d'un garde-corps. Le second profilé 2b peut être destiné à être lesté.

Les première et seconde enceintes 3a, 3b comportent respectivement des première et seconde parois 32a, 32b dans lesquelles sont ménagées respectivement les première et seconde lumières 31a, 31b. Les première et seconde lumières 31a, 31b présentent chacune une forme sensiblement rectangulaire.

Le dispositif de raccordement 1 comporte un organe de serrage 4 comportant des première et seconde surfaces d'appui 4a, 4b conformées pour s'engager respectivement dans les première et seconde lumières 31a, 31b. Les première et seconde surfaces d'appui 4a, 4b de l'organe de serrage 4 présentent respectivement une superficie sensiblement égale à la superficie des première et seconde lumières 31a, 31b.

Le corps 10 du dispositif de raccordement 1 présente une surface de support 101 orientée vers l'extérieur du corps 10, la surface de support 101 étant agencée pour supporter l'organe de serrage 4. La surface de support 101 est sensiblement plane de manière à définir un appui plan pour l'organe de serrage 4. Un orifice taraudé 102 est ménagé dans la surface de support 101.

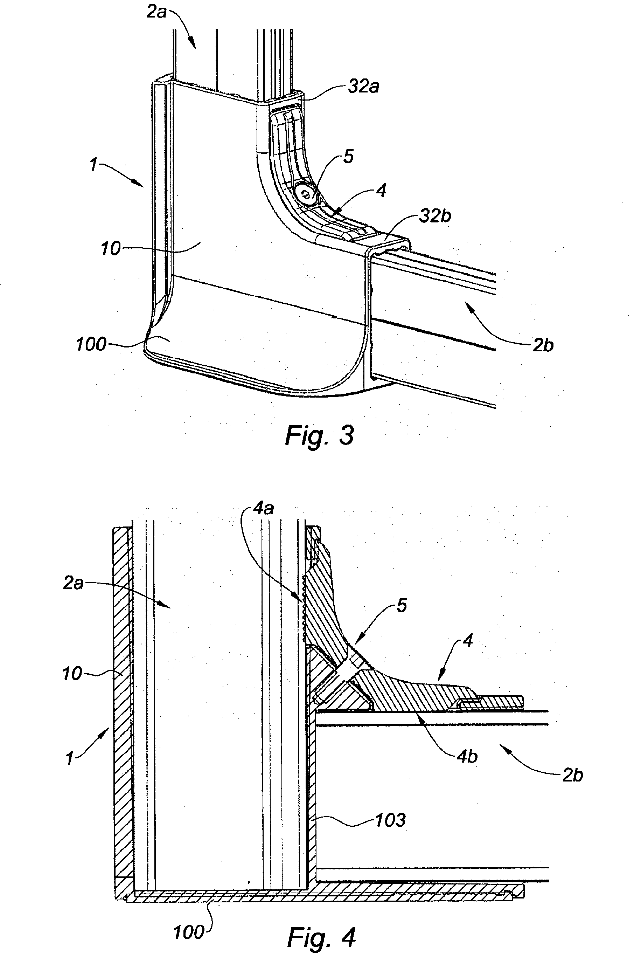

Les première et seconde parois 32a, 32b délimitent avec la surface de support 101 un logement conformé pour que l'organe de serrage 4 s'emboîte dans ledit logement, comme visible à la figure 3.

L'organe de serrage 4 comporte une surface de liaison 41 sensiblement plane reliant les surfaces d'appui 4a, 4b entre elles par des épaulements 410. Les épaulements 410 forment des moyens de butée agencés pour venir en butée contre la surface de support 101 lorsque l'organe de serrage 4 est emboîté dans le logement.

La surface de support 101 est conformée pour coopérer avec la surface de liaison 41 de l'organe de serrage 4 par complémentarité de forme.

L'organe de serrage 4 s'étend suivant une direction sensiblement curviligne de manière prolonger les première et seconde parois 32a, 32b lorsque l'organe de serrage 4 est emboîté dans le logement. Ainsi, un tel prolongement assurant la continuité entre les première et seconde parois 32a, 32b et l'organe de serrage 4 permet de conférer un caractère esthétique au dispositif de raccordement 1.

Le dispositif de raccordement 1 comporte des moyens de fixation agencés pour placer l'organe de serrage 4 sur la surface de support 101 du corps 10 dans une position de fixation (illustrée aux figures 3 et 4) dans laquelle les première et seconde surfaces d'appui 4a, 4b s'étendent respectivement à travers les première et seconde lumières 31a, 31b de manière à exercer une pression respectivement sur les premier et second profilés 2a, 2b lorsque ceux-ci sont reçus à l'intérieur des première et seconde enceintes 3a, 3b. Ainsi, chaque surface d'appui 4a, 4b forme une demi-mâchoire permettant de maintenir en position les profilés 2a, 2b respectivement à l'intérieur de l'enceinte 3a, 3b correspondante.

Les moyens de fixation comportent une vis de fixation 5 conformée pour coopérer avec l'orifice taraudé 102 de la surface de support 101 de sorte que la vis de fixation 5 plaque l'organe de serrage 4 dans la position de fixation contre la surface de support 101. A cet effet, un orifice traversant 40 est ménagé dans l'organe de serrage 4, l'orifice traversant 40 étant conformé pour recevoir la vis de fixation 5.

Comme visible à la figure 4, le corps 10 présente une cloison 103 agencée pour délimiter les première et seconde enceintes 3a, 3b. La surface de support 101 est montée sur la cloison 103, permettant ainsi d'améliorer sa tenue mécanique.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

C'est ainsi notamment que les enceintes 3a, 3b peuvent présenter différentes formes de sections transversales conformées pour recevoir différents types de profilés 2a, 2b.

## Revendications

1. Dispositif de raccordement (1) d'un premier et d'un second profilé (2a, 2b), comportant un corps (10) comprenant :
- des première et seconde enceintes (3a, 3b) délimitant respectivement des première et seconde ouvertures (30a, 30b) destinées à recevoir respectivement les premier et second profilés (2a, 2b),
- des première et seconde lumières (31 a, 31 b) débouchant respectivement dans les première et seconde enceintes (3a, 3b), le dispositif de raccordement (1) étant **caractérisé en ce qu'**il comporte :
- un organe de serrage (4) comportant des première et seconde surfaces d'appui (4a, 4b) conformées pour s'engager respectivement dans les première et seconde lumières (31a, 31 b),
- des moyens de fixation agencés pour placer l'organe de serrage (4) sur le corps (10) dans une position de fixation dans laquelle les première et seconde surfaces d'appui (4a, 4b) s'étendent respectivement à travers les première et seconde lumières (31a, 31b) de manière à exercer une pression respectivement sur les premier et second profilés (2a, 2b) lorsque ceux-ci sont reçus à l'intérieur des première et seconde enceintes (3a, 3b).

2. Dispositif de raccordement (1) selon la revendication 1, **caractérisé en ce que** le corps (10) délimite un logement conformé pour que l'organe de serrage (4) s'emboîte dans ledit logement.

3. Dispositif de raccordement (1) selon l'une des revendications 1 et 2, **caractérisé en ce que** le corps (10) présente une surface de support (101) orientée vers l'extérieur du corps (10), la surface de support étant agencée pour supporter l'organe de serrage (4).

4. Dispositif de raccordement (1) selon la revendication 3 en combinaison avec la revendication 2, **caractérisé en ce que** les première et seconde enceintes (3a, 3b) comportent respectivement des première et seconde parois (32a, 32b) dans lesquelles sont ménagées respectivement les première et seconde lumières (31a, 31b), et **en ce que** les première et seconde parois (32a, 32b) délimitent avec la surface de support (101) le logement.

5. Dispositif de raccordement (1) selon l'une des revendications 3 et 4, **caractérisé en ce que** la surface de support (101) est conformée pour coopérer avec l'organe de serrage (4) par complémentarité de forme.

6. Dispositif de raccordement (1) selon l'une des revendications 3 à 5, **caractérisé en ce que** l'organe de serrage (4) comporte des moyens de butée agencés pour venir en butée contre la surface de support (101).

7. Dispositif de raccordement (1) selon l'une des revendications 3 à 6, **caractérisé en ce que** les moyens de fixation comportent une vis de fixation (5) conformée pour coopérer avec la surface de support (101) de sorte que la vis de fixation(5) plaque l'organe de serrage (4) dans la position de fixation contre la surface de support (101).

8. Dispositif de raccordement (1) selon l'une des revendications 3 à 7, **caractérisé en ce que** le corps (10) présente une cloison (103) agencée pour délimiter les première et seconde enceintes (3a, 3b), et **en ce que** la surface de support (101) est montée sur la cloison (103).

9. Dispositif de raccordement (1) selon l'une des revendications 1 à 8, **caractérisé en ce que** les première et seconde enceintes (3a, 3b) s'étendent respectivement suivant des premier et second axes (Z'-Z, X'-X), de préférence sensiblement perpendiculaires entre eux.

10. Dispositif de raccordement (1) selon l'une des revendications 1 à 9, **caractérisé en ce que** les première et seconde surfaces d'appui (4a, 4b) de l'organe de serrage (4) présentent respectivement une superficie sensiblement égale à la superficie des première et seconde lumières (31 a, 31 b).

## Patentansprüche

1. Verbindungsvorrichtung (1) eines ersten und eines zweiten Profils (2a, 2b), die einen Körper (10) aufweist, der umfasst:
- einen ersten und zweiten Raum (3a, 3b), die jeweils eine erste und eine zweite Öffnung (30a, 30b) begrenzen, die dazu bestimmt sind, jeweils das erste und zweite Profil (2a, 2b) aufzunehmen,
- einen ersten und zweiten Schlitz (31 a, 31 b), die jeweils in den ersten und zweiten Raum (3a, 3b) münden, wobei die Verbindungsvorrichtung (1) **dadurch gekennzeichnet ist, dass** sie aufweist:
- ein Spannorgan (4), das eine erste und zweite Stützfläche (4a, 4b) aufweist, die ausgebildet sind, um jeweils in den ersten und zweiten Schlitz (31 a, 31 b) einzugreifen,
- Befestigungsmittel, die ausgebildet sind, um das Spannorgan (4) auf dem Körper (10) in einer Befestigungsposition zu platzieren, in der sich die erste und zweite Stützfläche (4a, 4b) jeweils durch den ersten und zweiten Schlitz (31 a, 31 b) derart erstrecken, dass ein Druck jeweils auf das erste und zweite Profil (2a, 2b) ausgeübt wird, wenn diese im ersten und zweiten Raum (3a, 3b) aufgenommen sind.

2. Verbindungsvorrichtung (1) nach Anspruch 1, **dadurch gekennzeichnet, dass** der Körper (10) eine Aufnahme begrenzt, die ausgebildet ist, damit das Spannorgan (4) in die Aufnahme einrastet.

3. Verbindungsvorrichtung (1) nach einem der Ansprüche 1 und 2, **dadurch gekennzeichnet, dass** der Körper (10) eine Stützfläche (101) aufweist, die nach außerhalb des Körpers (10) ausgerichtet ist, wobei die Stützfläche ausgebildet ist, um das Spannorgan (4) zu stützen.

4. Verbindungsvorrichtung (1) nach Anspruch 3 in Kombination mit Anspruch 2, **dadurch gekennzeichnet, dass** der erste und zweite Raum (3a, 3b) jeweils eine erste und zweite Wand (32a, 32b) aufweisen, in der jeweils der erste und zweite Schlitz (31 a, 31 b) eingearbeitet ist, und dass die erste und zweite Wand (32a, 32b) mit der Stützfläche (101) die Aufnahme begrenzen.

5. Verbindungsvorrichtung (1) nach einem der Ansprüche 3 und 4, **dadurch gekennzeichnet, dass** die Stützfläche (101) ausgebildet ist, um mit einem Spannorgan (4) durch Formkomplementarität zusammenzuarbeiten.

6. Verbindungsvorrichtung (1) nach einem der Ansprüche 3 bis 5, **dadurch gekennzeichnet, dass** das Spannorgan (4) Anschlagmittel aufweist, die ausgebildet sind, um gegen die Stützfläche (101) anzuschlagen.

7. Verbindungsvorrichtung (1) nach einem der Ansprüche 3 bis 6, **dadurch gekennzeichnet, dass** die Befestigungsmittel eine Befestigungsschraube (5) aufweisen, die ausgebildet ist, um mit der Stützfläche (101) derart zusammenzuarbeiten, dass die Befestigungsschraube (5) das Spannorgan (4) in der Befestigungsposition gegen die Stützfläche (101) drückt.

8. Verbindungsvorrichtung (1) nach einem der Ansprüche 3 bis 7, **dadurch gekennzeichnet, dass** der Körper (10) eine Trennwand (103) aufweist, die ausgebildet ist, um den ersten und zweiten Raum (3a, 3b) zu begrenzen und dass die Stützfläche (101) auf der Trennwand (103) montiert ist.

9. Verbindungsvorrichtung (1) nach einem der Ansprüche 1 bis 8, **dadurch gekennzeichnet, dass** sich der erste und zweite Raum (3a, 3b) jeweils gemäß einer ersten und zweiten Achse (Z'-Z, X'-X) erstrecken, vorzugsweise etwa lotrecht zwischen ihnen.

10. Verbindungsvorrichtung (1) nach einem der Ansprüche 1 bis 9, **dadurch gekennzeichnet, dass** die erste und zweite Stützfläche (4a, 4b) des Spannorgans (4) jeweils eine Oberfläche aufweisen, die etwa gleich der Oberfläche des ersten und zweiten Schlitzes (31 a, 31 b) ist.

## Claims

1. A device (1) for connecting a first and second profile (2a, 2b), including a body (10) comprising:
- first and second enclosures (3a, 3b) respectively defining first and second openings (30a, 30b) intended to receive the first and second profiles (2a, 2b), respectively,
- first and second apertures (31 a, 31 b) respectively emerging in the first and second enclosures (3a, 3b), the connecting device (1) being **characterized in that** it includes:
- a gripping member (4) including first and second bearing surfaces (4a, 4b) configured to engage in the first and second apertures (31 a, 31 b), respectively,
- fastening means arranged to place the gripping member (4) on the body (10) in a fastening position in which the first and second bearing surfaces (4a, 4b) extend through the first and second apertures (31 a, 31 b), respectively, so as to exert pressure on the first and second profiles (2a, 2b), respectively, when the latter are received inside the first and second enclosures (3a, 3b).

2. The connecting device (1) according to claim 1, **characterized in that** the body (10) defines a housing configured so that the gripping member (4) fits into said housing.

3. The connecting device (1) according to one of claims 1 and 2, **characterized in that** the body (10) has a support surface (101) oriented toward the outside of the body (10), the support surface being arranged to support the gripping member (4).

4. The connecting device (1) according to claim 3 combined with claim 2, **characterized in that** the first and second enclosures (3a, 3b) respectively include first and second walls (32a, 32b) in which the first and second apertures (31 a, 31 b) are respectively received, and **in that** the first and second walls (32a, 32b) define the housing with the support surface (101).

5. The connecting device (1) according to one of claims 3 and 4, **characterized in that** the support surface (101) is configured to cooperate with the gripping member (4) by shape matching.

6. The connecting device (1) according to one of claims 3 to 5, **characterized in that** the gripping member (4) includes abutment means arranged to abut against the support surface (101).

7. The connecting device (1) according to one of claims 3 to 6, **characterized in that** the fastening means include a fastening screw (5) configured to cooperate with the support surface (101) such that the fastening screw (5) presses the gripping member (4) in the fastened position against the support surface (101).

8. The connecting device (1) according to one of claims 3 to 7, **characterized in that** the body (10) has a partition (103) arranged to define the first and second enclosures (3a, 3b), and **in that** the support surface (101) is mounted on the partition (103).

9. The connecting device (1) according to one of claims 1 to 8, **characterized in that** the first and second enclosures (3a, 3b) respectively extend along first and second axes (Z'-Z, X'-X), preferably substantially perpendicular thereto.

10. The connecting device (1) according to one of claims 1 to 9, **characterized in that** the first and second bearing surfaces (4a, 4b) of the gripping member (4) have a surface area substantially equal to the surface area of the first and second apertures (31 a, 31 b), respectively.
